# EUROPÄISCHE PATENTANMELDUNG

(11) **EP 1 972 552 A1**
(43) Veröffentlichungstag der Anmeldung: **24.09.2008**
(21) Anmeldenummer: 06835798.7
(22) Anmeldetag: 25.10.2006
(51) Int. Cl.: B65B 5/10

(54) **VORRICHTUNG ZUR PLATZIERUNG VON PROBENGLÄSERN IN GEHÄUSEN**

(30) Priorität: 28.10.2005 RU 2005134508
(71) Anmelder: Izvozchikov, Iliya Borisovich, St. Petersburg, 194223 (RU)
(72) Erfinder: Izvozchikov, Iliya Borisovich, St. Petersburg, 194223 (RU)
(74) Vertreter: Weber, Walter
(86) Internationale Anmeldenummer: PCT/RU2006/000569
(87) Internationale Veröffentlichungsnummer: WO 2007/049994

(57) **Zusammenfassung**

Die erfindungsgemäße Vorrichtung umfasst mindestens eine Bereithaltungsvorrichtung mit waagerechten Fächern zur Aufnahme der Präsentationsträger, die wiederum mit einem Antrieb mit flexiblem Treibband gekoppelt ist, welcher ihr eine vertikale Vor- und Rückwärtsbewegung entlang einer Führung ermöglicht. Der Antrieb ist in Form eines geschlossenen Antriebskreises ausgebildet ist, der einen Motor und mindestens eine Laufscheibe beinhaltet. Die Vorrichtung beinhaltet zudem einen waagerechten Schieber, der auf der Arbeitsseite über eine Vorrichtung verfügt, mit der sich der Präsentationsträger greifen und in den außerhalb der Bereithaltungsvorrichtung liegenden Arbeitsbereich sowie zurück in die Bereithaltungsvorrichtung bewegen lässt, sowie einen Objektträger-Greifer, geeignet für eine Horizontalbewegung über dem Arbeitsbereich senkrecht zur Bewegung des waagerechten Schiebers.

## Beschreibung

### Technischer Bereich

Die Erfindung bezieht sich auf Instrumente zur Diagnostik und Untersuchung, genauer auf Vorrichtungen für die Präparation von histologischen und biologischen Proben zur mikroskopischen Untersuchung. Die Erfindung kann in medizinischen und biologischen Labors, insbesondere solchen, die sich auf histologische und zytologische Untersuchungen spezialisieren, bei der mikroskopischen Untersuchung von Geweben und Zellen eingesetzt werden.

Die aufbereiteten, gefärbten und auf Objektträgern angeordneten histologischen und biologischen Proben werden in bestimmte Eindeckungsmedien gebracht, um ein optisch homogenes Medium herzustellen und die Unversehrtheit der Proben für die Dauer der Untersuchung zu gewährleisten. Als Eindeckungsmedien werden beispielsweise Kanadabalsam, Polystyrol oder Styrol-Copolymere verwendet. Das Eindeckmedium wird in Form einer Xylol-Lösung auf die auf dem Objektträger befindliche Probe aufgetragen und mit einem Deckglas abgedeckt. Bevor die Probe zur mikroskopischen Untersuchung kommt, muss das Eindeckmedium zunächst in waagerechter Position trocknen, um eine Verschiebung des Deckglases und ein Auslaufen des Mediums zu verhindern. Zur Trocknung werden die Objektträger mit den eingedeckten Proben auf Präsentationsträgern angeordnet. Ein Präsentationsträger ist eine Ablagevorrichtung aus Karton, Holz oder Kunststoff, mit rechteckigen Aufnahmen, deren Abmessungen einem Standard-Objektträger entsprechen, und die in einer oder mehreren Reihen angeordnet sind. Ein Präsentationsträger verfügt über 10, 20 oder 30 Aufnahmen. Die Präsentationsträger werden mit den Proben zur mikroskopischen Untersuchung befördert.

In allen Labors werden die Objektträger von Hand in die Präsentationsträger angeordnet, was sehr aufwändig ist und eine hohe Konzentration des Personals erfordert. Zudem nehmen die Präsentationsträger während des Anordnungsvorgangs im Labor viel Platz ein.

### Nächstliegender Stand der Technik

Es sind Vorrichtungen zur Anordnung von Objektträgern auf Präsentationsträgern bekannt. Bekannt ist die Vorrichtung der Firma VisionBioSystems, Australien, mit deren Hilfe sich Objektträger aus Präsentationsträgern, die in einer Bereithaltungsvorrichtung liegen, auf den Objekttisch eines Mikroskops sowie zurück auf den Präsentationsträger befördern lassen (Kopie des Prospekts liegt bei), jedoch müssen zur Nutzung dieser Vorrichtung die Objektträger zuvor auf den Präsentationsträgern angeordnet werden.

### Offenbarung der Erfindung

Die Erfindung geht von der technischen Aufgabe aus, eine Vorrichtung zu entwickeln, die es ermöglicht, den aufwändigen Prozess der Anordnung von eingedeckten Objektträgern auf Präsentationsträgern zu mechanisieren.

Erfindungsgemäß wird eine Vorrichtung zur Anordnung von Objektträgern auf Präsentationsträgern vorgelegt, die mindestens eine Bereithaltungsvorrichtung mit waagerechten Fächern zur Aufnahme der Präsentationsträger beinhaltet, die wiederum mit einem Antrieb mit flexiblem Treibband gekoppelt ist, welcher ihr eine vertikale Vor- und Rückwärtsbewegung entlang einer Führung ermöglicht, wobei der Antrieb in Form eines geschlossenen Antriebskreises ausgebildet ist, der einen Motor und mindestens eine Laufscheibe beinhaltet, einen waagerechten Schieber, der auf der Arbeitsseite über eine Vorrichtung verfügt, mit der sich der Präsentationsträger greifen und in den außerhalb der Bereithaltungsvorrichtung liegenden Arbeitsbereich sowie zurück in die Bereithaltungsvorrichtung bewegen lässt, sowie einen Objektträger-Greifer, geeignet für eine Horizontalbewegung über dem Arbeitsbereich senkrecht zur Bewegung des waagerechten Schiebers.

Die genannte Vorrichtung kann zwei Bereithaltungsvorrichtungen umfassen, die sich jeweils zu beiden Seiten des Arbeitsbereichs befinden, wobei die zweite Bereithaltungsvorrichtung ebenfalls mit dem genannten Antrieb mit flexiblem Treibband gekoppelt ist und eine Vor- und Rückwärtsbewegung nach oben bzw. nach unten ausführt. Falls die Vorrichtung zwei Bereithaltungsvorrichtungen beinhaltet, so kann der Antrieb zwei weitere Laufscheiben beinhalten, wobei die eine Laufscheibe über der zweiten Bereithaltungsvorrichtung auf Höhe des Motors angebracht ist und die zweite unter der zweiten Bereithaltungsvorrichtung, auf gleicher Höhe wie die Laufscheibe unter der ersten Bereithaltungsvorrichtung.

Die am waagerechten Schieber angebrachte Vorrichtung zum Greifen des Präsentationsträgers kann als mechanischer Verschluss oder als magnetischer Greifer ausgebildet sein.

### Erläuterung der Zeichnungen

Die beanspruchte Erfindung kann anhand der in Fig. 1 bis 4 dargestellten Zeichnungen beschrieben werden.
Fig. 1 zeigt die beanspruchte Vorrichtung mit einer Bereithaltungsvorrichtung mit Fächern zur Aufnahme der Präsentationsträger.
Fig. 2 zeigt eine Draufsicht derselben Vorrichtung in der Bewegungsebene des waagerechten Schiebers.
Fig. 3 zeigt die beanspruchte Vorrichtung mit zwei Bereithaltungsvorrichtungen mit Fächern zur Aufnahme der Präsentationsträger.
Fig. 4 zeigt eine Draufsicht der Vorrichtung gemäß Fig. 3 in der Bewegungsebene des waagerechten Schiebers.

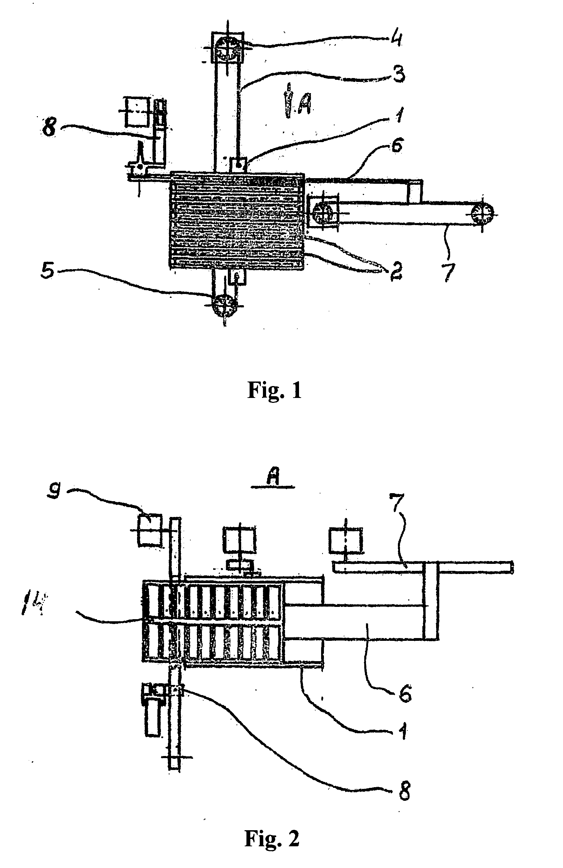

Die Bereithaltungsvorrichtung 1 (Fig. 1, 2) mit den Fächern 2 zur Aufnahme der Präsentationsträger ist mit dem Antrieb 3 gekoppelt, der als geschlossener Antriebskreis ausgebildet ist und den Motor 4 sowie die Laufscheibe 5 umfasst. Der geschlossene Antriebskreis kann als Drahtseil, als flexibles Band aus Metall, Gummi, Kunststoff oder anderem Material, als Kette oder Ähnliches ausgebildet sein. Der waagerechte Schieber 6 ist mit dem Antrieb 7 gekoppelt, der eine Vor-und Rückwärtsbewegung ermöglicht. Auf der Arbeitsseite des Schiebers 6 ist ein magnetischer oder mechanischer Greifer jeglicher Ausführung angebracht (nicht gezeigt). Im ersten Fall müssen die Präsentationsträger an den kurzen Seiten Streifen aus Eisen, Stahl oder einem anderen magnetischen Material aufweisen. Über dem Arbeitsbereich befindet sich der Objektträger-Greifer 8, geeignet für eine Horizontalbewegung senkrecht zur Bewegung des Schiebers 6 mit Hilfe des Antriebs 9 (Fig. 2).

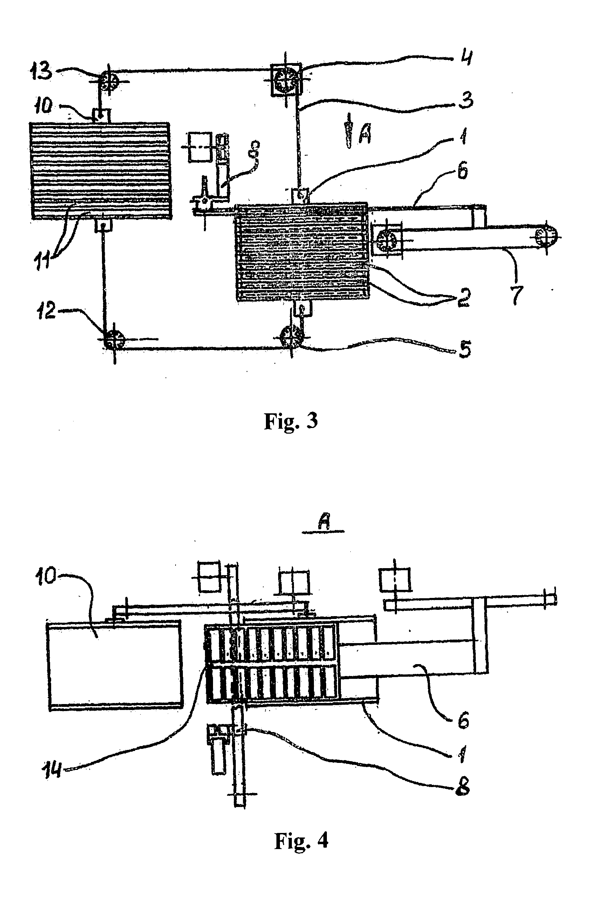

Die Vorrichtung kann eine zweite Bereithaltungsvorrichtung 10 beinhalten (Fig. 3 und 4) mit den Fächern 11 zur Aufnahme der Präsentationsträger. In diesem Fall umfasst der Antrieb zwei weitere Laufscheiben 12 und 13.

Die Funktionsweise der Vorrichtung ist wie folgt:

Der Schieber 6 (Fig. 2) schiebt den Präsentationsträger 14 um die Breite einer Objektträger-Aufnahme in den Arbeitsbereich. Der Greifer 8 verfährt über dem Arbeitsbereich und legt den Objektträger in die Objektträger-Aufnahme des Präsentationsträgers. Sodann bewegt der Schieber 6 den Präsentationsträger 14 im Arbeitsbereich um die Breite der nächsten Aufnahme weiter, und der Greifer 8 legt den nächsten Objektträger ab. Wird ein Präsentationsträger mit mehreren Reihen verwendet, lassen sich die Objektträger auf beliebige Weise anordnen: entweder zuerst in einer Reihe, dann in der nächsten, oder gleichzeitig in beiden Aufnahmen des um jeweils einen Schritt verschobenen Präsentationsträgers.

Sobald der Präsentationsträger 14 gefüllt ist, bringt der Schieber 6 ihn in das Fach der Bereithaltungsvorrichtung 1 zurück. Durch die Bewegung des Antriebs 3 bewegt sich die Bereithaltungsvorrichtung 1 um eine Fächerhöhe, sodass der Schieber 6 den nächsten Präsentationsträger greifen kann. (Fig. 1)

Falls die Vorrichtung zwei Bereithaltungsvorrichtungen umfasst (Fig. 3 und 4), werden die leeren Präsentationsträger in die Bereithaltungsvorrichtung 1 gelegt. Sobald ein Präsentationsträger gefüllt ist, wird er in ein Fach der leeren Bereithaltungsvorrichtung 10 geschoben. Durch die Bewegung des Antriebs 3 wird die Bereithaltungsvorrichtung 1 um eine Fächerhöhe nach oben versetzt, während die Bereithaltungsvorrichtung 10 gleichzeitig um dieselbe Distanz nach unten sinkt. Sobald die Bereithaltungsvorrichtung 10 mit vollen Präsentationsträgern gefüllt ist, kann sie geleert, und die Bereithaltungsvorrichtung 1 entsprechend mit leeren Präsentationsträgern gefüllt werden.

Falls die Objektträger mit maschinenlesbarem Code (Mikrochip, Strichcode o. a.) versehen sind, ist eine Automatisierung der Anordnung durch die beanspruchte Vorrichtung möglich. Somit lassen sich alle Objektträger zusammenfassen, die sich auf einen spezifische Fall beziehen. Eine Vorrichtung zur Codeerfassung kann z. B. am Greifer 8 angebracht werden.

### Gewerbliche Verwendbarkeit

Die beanspruchte Vorrichtung zur Anordnung von Objektträgern auf Präsentationsträgern kann in Labors eingesetzt werden, die sich auf histologische und zytologische Untersuchungen spezialisieren, sowie in jeglichen anderen biologischen und medizinischen Einrichtungen, die sich mit der mikroskopischen Untersuchung von Geweben und Zellen befassen.

## Patentansprüche

1. Vorrichtung zur Anordnung von Objektträgern auf Präsentationsträgern, beinhaltend mindestens eine Bereithaltungsvorrichtung mit waagerechten Fächern zur Aufnahme der Präsentationsträger, die gekoppelt ist mit einem Antrieb mit flexiblem Treibband, der ihr eine vertikale Vor- und Rückwärtsbewegung entlang einer Führung ermöglicht, wobei der Antrieb als geschlossener Antriebskreis ausgebildet ist, der einen Motor sowie mindestens eine Laufscheibe beinhaltet, einen waagerechten Schieber, der auf der Arbeitsseite über eine Vorrichtung verfügt, mit der sich der Präsentationsträger greifen und in den außerhalb der Bereithaltungsvorrichtung befindlichen Arbeitsbereich sowie zurück in die Bereithaltungsvorrichtung bewegen lässt, sowie einen Objektträger-Greifer, geeignet für eine Horizontalbewegung über dem Arbeitsbereich senkrecht zur Bewegung des waagerechten Schiebers.

2. Vorrichtung zur Anordnung von Objektträgern auf Präsentationsträgern gemäß Anspruch 1, **dadurch gekennzeichnet, dass** sie mit einer zweiten Bereithaltungsvorrichtung mit Fächern zur Aufnahme von Präsentationsträgern ausgestattet ist, die sich auf der anderen Seite des Arbeitsbereichs befindet und mit dem Antrieb mit flexiblem Treibband gekoppelt ist.

3. Vorrichtung zur Anordnung von Objektträgern auf Präsentationsträgern gemäß Anspruch 2, **dadurch gekennzeichnet, dass** sie zwei weitere Laufscheiben beinhaltet, von denen die eine über der zweiten Bereithaltungsvorrichtung in Höhe des Motors angebracht ist, und die zweite unter der zweiten Bereithaltungsvorrichtung, auf gleicher Höhe wie die Laufscheibe unter der ersten Bereithaltungsvorrichtung.

4. Vorrichtung zur Anordnung von Objektträgern auf Präsentationsträgern gemäß Anspruch 1, **dadurch gekennzeichnet, dass** die Greifvorrichtung des waagerechten Schiebers in Form eines mechanischen Verschlusses ausgebildet ist.

5. Vorrichtung zur Anordnung von Objektträgern auf Präsentationsträgern gemäß Anspruch 1, **dadurch gekennzeichnet, dass** die Greifvorrichtung des waagerechten Schiebers in Form eines magnetischen Greifers ausgebildet ist.
